# EUROPÄISCHE PATENTSCHRIFT

(11) **EP 1 621 522 B1**
(45) Veröffentlichungstag und Bekanntmachung des Hinweises auf die Patenterteilung: **03.10.2007**
(21) Anmeldenummer: 05106526.6
(22) Anmeldetag: 15.07.2005
(51) Int. Cl.: C02F 11/12, C05F 17/02, E02F 3/92, F26B 25/04

(54) **Vorrichtung zum Wenden und Rückvermischen von Feuchtgut**
Device for mixing wet substances
Dispositif pour mélanger des substances humides

(30) Priorität: 30.07.2004 DE 102004037209
(43) Veröffentlichungstag der Anmeldung: 01.02.2006
(73) Patentinhaber: Hans Huber AG Maschinen- und Anlagenbau, D-92334 Berching (DE)
(72) Erfinder: Kraus, Karl, 79777, Ühlingen-Birkendorf (DE)
(74) Vertreter: Bergmeier, Werner

(56) Entgegenhaltungen:
- DE-A1- 19 836 268
- US-A- 5 065 528
- US-A1- 2004 005 698
- LUBOSCHIK, ULRICH: "Solar sludge drying - based on the IST process" RENEWABLE ENERGY, Bd. 16, 1999, Seiten 785-788, XP002349552
- PATENT ABSTRACTS OF JAPAN Bd. 016, Nr. 464 (M-1316), 28. September 1992 (1992-09-28) & JP 04 165287 A (KANEKO AGRICULT MACH CO LTD), 11. Juni 1992 (1992-06-11)

## Beschreibung

Die vorliegende Erfindung betrifft eine Wendeeinrichtung zum Wenden und Rückvermischen von Feuchtgut, insbesondere von Klärschlamm, in feuchtem und getrocknetem Zustand in einer Trocknungsanlage, in welcher das Feuchtgut zum Trocknen auf einem Boden in einer Schicht ausgebreitet ist. Die Wendeeinrichtung weist hierbei zumindest eine Schaufel auf, welche innerhalb eines Umkreises um eine Achse drehbar ist.

Aus der DE 203 04 220 U1 ist eine Vorrichtung zum Trocknen von Schlamm bekannt, wobei der zu trocknende Schlamm auf einem Trocknungsbeet zur solaren Trocknung ausgebreitet ist. Die Vorrichtung weist eine über das Trocknungsbeet verfahrbare Gerätebrücke auf, an der eine Vielzahl von Schlammbearbeitungswerkzeugen zur Schlammwendung und Verkrümelung angeordnet ist. Die Gerätebrücke ist hierbei beispielsweise auf seitlichen, neben dem Trocknungsbeet verlaufenden Laufbahnen geführt. In einer Weiterbildung wird vorgeschlagen, daß die Gerätebrücke mit einem Räumschild versehen ist. Das Räumschild breitet den vorentwässerten Schlamm gleichmäßig auf dem Trocknungsbeet aus und schiebt nach Beendigung des Trocknungsvorgangs den getrockneten Schlamm aus dem Beet aus. Anschließend wird die nächste Charge Trocknungsgut zugeführt. Die an der Gerätebrücke angeordneten Werkzeuge dienen der Durchmischung und Verkrümelung des Schlammes, ein Transport durch die Trocknungsanlage ist mittels der Werkzeuge nicht möglich. Eine kontinuierliche Zu- und Abfuhr von Trocknungsgut ist somit ebenfalls nicht möglich.

Aus der DE 201 07 576 U1 ist eine Vorrichtung zum Trocknen von Feuchtgut bekannt, bei der das Feuchtgut zum Trocknen in einem Trocknungsbett ausgebreitet ist. Über eine Gebläseeinrichtung wird dem Feuchtgut warme Trocknungsluft zugeführt. In einer vorteilhaften Ausführungsform ist eine Misch- und Ausräumeinrichtung zum Mischen und Transportieren des Feuchtgutes vorgesehen. Die Durchmischung bzw. Wendung ermöglicht eine gleichmäßige Trocknung des Feuchtgutes, da sichergestellt wird, daß alle Bestandteile des Trocknungsgutes mit der Trocknungsluft in Berührung kommen. Darüber hinaus ermöglicht die Misch- und Ausräumvorrichtung beim Wenden einen Weitertransport von Trocknungsgut durch die Anlage. Das Trocknungsgut kann der Trocknungsanlage über Fördereinrichtungen zu- und abgeführt werden. Nachteilig bei dieser Misch- und Ausräumeinrichtung ist es jedoch, dass sich beim Wendevorgang Konglomerate aus Feuchtgut bilden können, die dann von der Mischeinrichtung abgelegt werden. Beim nächsten Mischvorgang lassen sich diese Konglomerate nur sehr schwer durch die Mischeinrichtung aufnehmen, da sie vor den Schalen der Mischeinrichtung hergeschoben werden bzw. vor ihr wegrollen. Diese Konglomerate werden somit nicht wieder unter das zu trocknende Feuchtgut gemischt, sondern mit einer noch sehr hohen Restfeuchte durch die Trocknungsanlage transportiert und über die Fördereinrichtung abgeführt. Eine ausreichende und gleichmäßige Trocknung des Feuchtgutes ist somit nicht zu erreichen.

Aufgabe der vorliegenden Erfindung ist es, die oben beschriebenen Nachteile zu vermeiden und eine Vorrichtung zu schaffen, mit welcher eine kontinuierliche Zu- und Abfuhr von Trocknungsgut bei gleichmäßiger Durchtrocknung erreicht werden kann.

Die Aufgabe wird gelöst durch eine Wendeeinrichtung gemäß Anspruch 1.

Eine erfindungsgemäße Wendeeinrichtung zum Wenden und Rückvermischen von Feuchtgut in feuchtem und getrocknetem Zustand, insbesondere von Klärschlamm, befindet sich in einer Trocknungsanlage. Das Feuchtgut ist in der Trocknungsanlage zum Trocknen auf einem Boden in einer Schicht ausgebreitet. Die Wendeeinrichtung weist hierbei zumindest eine Schaufel auf, welche innerhalb eines Umkreises um eine Achse drehbar ist. Unmittelbar außerhalb des Umkreises und oberhalb der Feuchtgutschicht ist eine Rückhaltevorrichtung für das Feuchtgut angeordnet. Die Rückhaltevorrichtung wirkt mit der Schaufel zusammen und ermöglicht ein besonders leichtes Aufnehmen des Feuchtgutes, insbesondere auch von Konglomeraten, auf die Schaufel. Die Rückhaltevorrichtung verhindert, daß Konglomerate vor der Schaufel hergeschoben werden und nicht in die Wendeeinrichtung gelangen. Der Transport von noch feuchten Konglomeraten durch die Trocknungsanlage und deren Abfuhr wird verhindert. Durch den Weitertransport des Feuchtgutes beim Wenden stellt sich über die Länge des Trocknungsbetts ein Feuchtigkeitsgradient ein. Dadurch kann an einem Ende der Anlage Feuchtgut zugeführt werden, während am anderen Ende ein gleichmäßig durchgetrocknetes Trocknungsgut abgeführt wird. Darüber hinaus bewirkt das Zusammenwirken der Rückhaltevorrichtung mit der Schaufel eine besonders gute Verkrümelung des Feuchtgutes und Zerkleinerung der Konglomerate.

Wird der Wendeeinrichtung ein Antrieb zugeordnet, kann die Wendeeinrichtung entlang des Bodens, quer zu ihrer Achse verfahren werden. Dies ermöglicht ein gleichmäßiges Bearbeiten des Feuchtgutes über die gesamte Länge der Trocknungsanlage und, in Abstimmung mit der Rotation der Schaufeln, den Transport des Feuchtgutes durch die Trocknungsanlage.

Vorteilhaft ist es, wenn die Wendeeinrichtung einen Antrieb zum Verändern des Abstandes des Umkreises vom Boden aufweist. Die Wendeeinrichtung kann somit in Bezug auf den Boden in einen gewünschten Abstand eingestellt werden. Bei einem großen Abstand vom Boden kann die Wendeeinrichtung ganz von dem Feuchtgut abgehoben sein und damit, beispielsweise für eine Leerfahrt oder eine Rückfahrt, eine Durchmischung verhindert werden.

Bei einer bevorzugten Ausführungsform der Erfindung ist die Rückhaltevorrichtung in ihrer Höhe in Bezug auf den Boden und / oder die Schicht mit einer Stelleinrichtung veränderbar. Der Abstand der Rückhaltevorrichtung zu der Schicht bzw. zum Boden beeinflusst die Menge und Größe der Konglomerate, die nicht mehr auf die Schaufel aufgenommen werden können. Darüber hinaus kann die Rückhaltevorrichtung durch die Stelleinrichtung so weit von der Schicht abgehoben werden, daß eine Rückfahrt oder Leerfahrt problemlos möglich ist.

Wird die Rückhaltevorrichtung als Schild ausgeführt, kann sie auch zum Planieren der Schicht eingesetzt werden. Das Schild ist hierbei stationär, aber gegebenenfalls in seiner Höhe veränderlich, an der Wendeeinrichtung angeordnet.

In einer anderen vorteilhaften Weiterbildung der Erfindung wird die Rückhaltevorrichtung als Lappen, beispielsweise aus gummiartigen Materialien, ausgeführt. Durch diese kostengünstige Konstruktion können Stelleinrichtungen für die Höheneinstellung der Rückhaltevorrichtung entfallen.

Der Lappen kann hierbei stationär oder auch mit der Schaufel drehbar angeordnet sein. Wird der Lappen drehbar mit der Schaufel angeordnet, ermöglicht dies eine besonders einfache Bauweise der Rückhaltevorrichtung.

Eine weitere Ausführung der Erfindung sieht vor, daß die Rückhaltevorrichtung entlang des Umkreises der Wendeeinrichtung verschiebbar ist. Dies gewährleistet in jeder Höhenposition der Rückhaltevorrichtung einen definierten Abstand von Schaufel und Rückhaltevorrichtung zueinander und dadurch ein besonders vorteilhaftes Zusammenwirken.

Daneben ist es vorteilhaft, wenn der Wendeeinrichtung eine Räumeinrichtung zugeordnet ist, um das Feuchtgut aus der Trocknungsanlage auszuschieben. Ebenso kann die Räumeinrichtung zum Planieren der Feuchtgutschicht, beispielsweise zu Hygienisierungszwecken, eingesetzt werden.

Werden die Räumeinrichtung und die Rückhaltevorrichtung als eine Baueinheit ausgeführt, wird eine besonders kostengünstige und Platz sparende Bauweise erreicht.

Eine weitere vorteilhafte Weiterbildung der Erfindung sieht vor, die Räumeinrichtung und/oder die Rückhaltevorrichtung bezogen auf eine Fahrtrichtung der Wendeeinrichtung vor und/oder hinter der Wendeeinrichtung anzuordnen. Werden Rückhaltevorrichtung und Räumeinrichtung als getrennte Baueinheiten ausgeführt, kann jeweils eine Baueinheit vor und eine hinter der Wendeeinrichtung angeordnet werden. Werden sie als eine Baueinheit ausgeführt und eine solche Baueinheit vor und hinter der Wendeeinrichtung angeordnet, kann das Wenden und/oder Räumen des Feuchtgutes in beiden Fahrtrichtungen der Wendeeinrichtung erfolgen.

Vorzugsweise wird der Wendeeinrichtung ein Sensor zur Feststellung der Schichthöhe zugeordnet. In Abhängigkeit der Schichthöhe können die Wendeeinrichtung, die Rückhaltevorrichtung sowie die Räumeinrichtung in ihrer Höhe eingestellt werden.

In einer besonders vorteilhaften Ausführungsform der Erfindung ist der Sensor mit einer Steuerung zur Ermittlung einer durchschnittlichen Schichthöhe verbunden. Die durchschnittliche Schichthöhe bestimmt die Höheneinstellung von Wende- und Räumeinrichtung sowie der Rückhaltevorrichtung.

Ebenfalls vorteilhaft ist es, wenn die Schaufel direkt an einer Welle angeordnet ist. Es ergibt sich hierdurch eine einfache und kostengünstige Konstruktion.

Besonders vorteilhaft ist es, wenn mindestens eine Schaufel in einem Segment angeordnet ist und mehrere Segmente in axialer Richtung auf einer Welle angeordnet sind. Die einzelnen Segmente werden hierbei an die Welle geschweißt oder geschraubt oder auf andere Art mit der Welle verbunden. Diese Bauweise ermöglicht im Vergleich zum direkten Schweißen der Schaufeln an die Welle eine stark verbesserte Zugänglichkeit bei der Fertigung und erleichtert das Austauschen einzelner Segmente.

Entspricht die Schaufel im Querschnitt einem halbkreisähnlichen Polygonzug, kann die Schaufel auf eine besonders einfache und kostengünstige Weise gefertigt werden, beispielsweise durch das Aneinanderschweißen von einzelnen, geraden Blechstücken oder durch das Abkanten einer Blechtafel.

Bei einer anderen vorteilhaften Ausführungsform der Erfindung ist die Schaufel an einer radial zum Umkreis verlaufenden Strebe angeordnet. Dies ermöglicht eine kostengünstige Fertigung aus einfachen Grundelementen, beispielsweise geraden Blechstücken, und gute Zugänglichkeit bei der Montage. Bei einer symmetrischen Anordnung der Schaufeln zur Strebe ermöglicht dies ein Wenden bei Vorwärts- und Rückwärtsfahrt ohne Leerfahrt.

Eine weitere vorteilhafte Ausführungsform sieht vor, daß die Schaufel parallel zur Achse verläuft. Dadurch wird ein besonders gleichmäßiger Transport des Trocknungsgutes durch die Trocknungsanlage erreicht.

Um eine bessere Krafteinleitung beim Eintauchen der Schaufeln in das Feuchtgut zu erreichen, können mehrere Schaufeln in Achsrichtung versetzt zueinander angeordnet werden. Hierdurch werden Stöße auf die Lager vermindert und die Lebensdauer der Lager verlängert.

Ferner ist es vorteilhaft, wenn die Schaufel in einer vorbestimmten Position arretierbar ist. Bei der Rückfahrt der Wendeeinrichtung wird so eine unerwünschte weitere Durchmischung des Feuchtgutes unterbunden. Zum Ausräumen des Trocknungsbetts durch die Räumvorrichtung kann die Schaufel in waagerechter Position arretiert werden, um den Räumvorgang nicht zu behindern und Schäden zu vermeiden. Die Schaufel kann in arretierter Position aber auch zum Planieren der Schicht oder zum Ausräumen des Feuchtgutes aus der Trocknungsanlage verwendet werden.

Als ebenfalls vorteilhaft hat es sich erwiesen, wenn die Wendeeinrichtung mittig ein Stützrad aufweist. Eine Durchbiegung der Schaufel oder der Welle wird durch diese zusätzliche Lagerung insbesondere bei breiteren Wendeeinrichtungen verhindert. Die Höhe der Wendeeinrichtung ist somit über die gesamte Breite konstant, was sowohl gleichmäßig tiefes Durchmischen gewährt, als auch Schäden an Schaufeln und Anlage verhindert.

Eine besonders vorteilhafte Weiterbildung der Erfindung sieht vor, dem Stützrad einen Pflug zuzuordnen. Dieser räumt in der Feuchtgutschicht eine Spur für das Stützrad frei und verhindert so ein Blockieren des Stützrades, beispielsweise durch Ansammlungen von Trocknungsgut oder eine Veränderung der Arbeitshöhe der Wendeeinrichtung, wenn das Stützrad auf Feuchtgut auflaufen würde.

Weitere Vorteile der Erfindung sind in den folgenden Ausführungsbeispielen beschrieben. Es zeigen
- **Figur 1**: eine schematische Darstellung einer erfindungsgemäßen Wendeeinrichtung in einer Trocknungsanlage,
- **Figur 2**: eine Darstellung des Zusammenwirkens von Rückhaltevorrichtung und Schaufel in der Wendeeinrichtung, sowie eine Stelleinrichtung zur Veränderung der Höhe der Rückhaltevorrichtung,
- **Figur 3**: eine Detailansicht einer Wendeeinrichtung mit einer Räumeinrichtung und einer Rückhaltevorrichtung,
- **Figur 4**: eine Wendeeinrichtung in Portalbauweise mit einem Stützrad,
- **Figur 5**: eine perspektivische Darstellung einer Wendeeinrichtung mit mehreren, in Achsrichtung zueinander versetzten Schaufeln,
- **Figur 6**: eine Detailsicht einer Schaufel in Anordnung an einer Strebe.

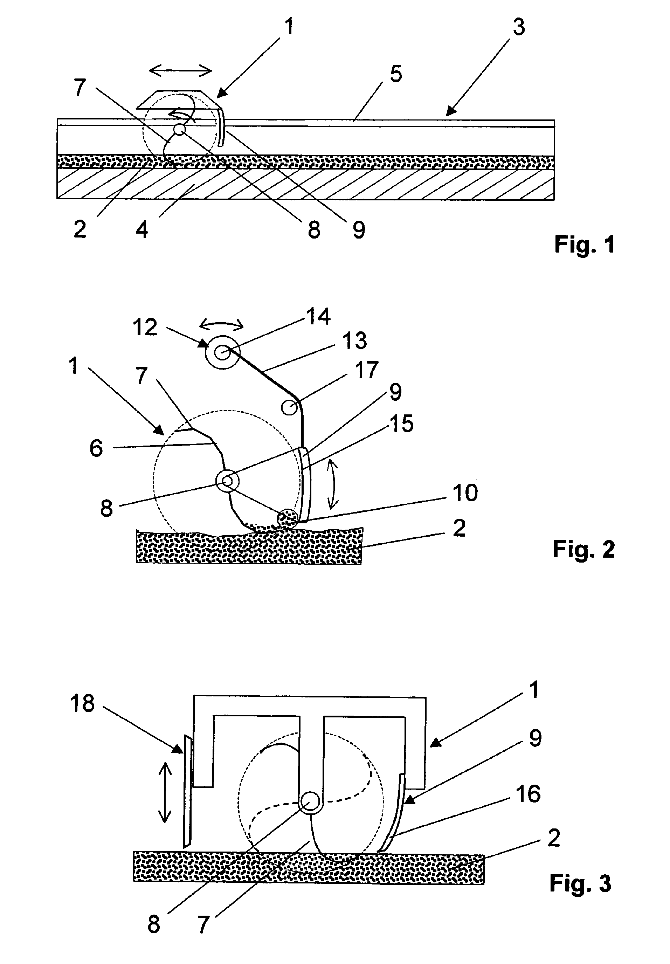

In Figur 1 wird eine Wendeeinrichtung 1 in schematischer Darstellung gezeigt. Auf einem Boden 4 in einer Trocknungsanlage 3 ist ein Feuchtgut 2 ausgebreitet. Das Feuchtgut 2 ist insbesondere ein Klärschlamm, welcher einen Trockenrückstand aufweist. Die in dem Feuchtgut 2 enthaltene Feuchtigkeit wird in der Trocknungsanlage 3 durch solare und/oder thermische Trocknung weitgehend aus dem Feuchtgut 2 entfernt. Um eine gleichmäßige Trocknung des Feuchtgutes 2 zu erzielen, ist die Wendeeinrichtung 1 vorgesehen. Die Wendeeinrichtung 1 besteht im wesentlichen aus mindestens einer, um eine Achse 8 drehbaren Schaufel 7, welche das Feuchtgut 2 wendet und mischt. Die Wendeeinrichtung 1 wird entsprechend des Doppelpfeiles entlang einer Führungsschiene 5 hin und her verfahren und wendet und mischt dabei das Feuchtgut 2. Um in dem Feuchtgut gebildete Konglomerate durch die Schaufeln 7 aufnehmen zu können, ist eine Rückhaltevorrichtung 9 an der Wendeeinrichtung 1 angeordnet.

Die Wendeeinrichtung 1 verhindert darüber hinaus, daß das Feuchtgut 2 an dem Boden 4 durch übermäßige Trocknung anklebt. Das Feuchtgut 2 wird beim Wendevorgang vor der Wendeeinrichtung 1 aufgenommen und hinter ihr wieder abgelegt, so daß während des Wendens ein Transport des Feuchtgutes in Längsrichtung durch die Trocknungsanlage stattfindet. Werden die Rotation der Schaufeln 7 und der Vorschub der Wendeeinrichtung 1 entsprechend aufeinander abgestimmt, entsteht so ein Feuchtigkeitsgradient in Längsrichtung der Trocknungsanlage. Die Anlage kann dadurch am einen Ende der Anlage mit Feuchtgut 2 beschickt werden und das bereits getrocknete Feuchtgut 2 kann am anderen Ende der Anlage abgeführt werden. Das Feuchtgut 2 kann jedoch auch ohne Weitertransport auf der Stelle gewendet werden.

Figur 2 zeigt das Zusammenwirken von Rückhaltevorrichtung 9 und Schaufel 7 sowie eine Stelleinrichtung 12 zur Veränderung der Höhe der Rückhaltevorrichtung 9. Die Schaufel 7 ist in diesem Ausführungsbeispiel aus einzelnen, durch Schweißen miteinander verbundenen, Blechen 6 hergestellt, so daß sie im Querschnitt einem halbkreisähnlichen Polygonzug entspricht. Die Schaufel 7 kann so auf eine besonders einfache und kostengünstige Weise gefertigt werden. Die Schaufel 7 kann jedoch auch auf andere Art, beispielsweise durch Abkanten eines Bleches gefertigt sein, ebenso können mehrere Schaufeln 7 oder auch nur eine um die Achse 8 angeordnet sein.

Befinden sich Konglomerate 10 aus Feuchtgut 2 vor der Schaufel 7, werden diese von der stationär an der Wendeeinrichtung 1 angebrachten Rückhaltevorrichtung 9 gegen die Schaufel 7 abgestützt. Die Konglomerate 10 können so problemlos aufgenommen werden, ohne vor der Schaufel 7 her zu rollen. Ein Weitertransport von noch feuchten Konglomeraten 10 in trockenere Zonen des Trocknungsbetts und damit eine erneute Durchfeuchtung bereits getrockneten Feuchtgutes 2 wird durch die Rückhaltevorrichtung 9 verhindert. Darüber hinaus bewirkt die Rückhaltevorrichtung 9 im Zusammenwirken mit der Schaufel 7 eine verbesserte Zerkleinerung und Verkrümelung des Feuchtgutes 2.

In der dargestellten Ausführung ist die Rückhaltevorrichtung 9 mit einer Stelleinrichtung 12 in ihrer Höhe verstellbar, so daß der Abstand zur Oberfläche des Feuchtgutes 2 einstellbar ist. Dieser Abstand bestimmt maßgeblich die Menge und Größe der Konglomerate 10, die der Wendeeinrichtung 1 zugeführt werden. Ist der Abstand klein gewählt, können nur kleine Konglomerate 10 vor der Wendeeinrichtung 1 hergeschoben werden, während größere Konglomerate 10 auf die Schaufel 7 gelangen und gewendet und zerkrümelt werden.

Im dargestellten Beispiel ist die Rückhaltevorrichtung 9 entlang des Umkreises der Wendeeinrichtung 1 verschiebbar. Dies bewirkt einen konstanten, definierten Abstand von Schaufeln 7 und Rückhaltevorrichtung 9 zueinander, was ein besonders gleichmäßiges Durchmischen des Feuchtgutes 2 auch bei verschiedenen Höheneinstellungen gewährleistet.

Die Stelleinrichtung 12 ist hier als Seilwinde 14 ausgeführt. Über Umlenkrollen 17 werden die an der Rückhaltevorrichtung 9 angebrachten Seile 13 auf die Winde 14 gewickelt, so daß sich eine Höhenverstellung der Rückhaltevorrichtung 9 entlang des Umkreises der Wendeeinrichtung 1 ergibt. Ebenso sind aber auch andere Höhenverstellungen, beispielsweise rein translatorisch möglich.

Wird der Abstand der Rückhaltevorrichtung 9 zur Schicht des Feuchtgutes 2 sehr klein eingestellt, kann die Rückhaltevorrichtung 9 auch zum Planieren der Feuchtgutschicht, etwa zu Hygienisierungszwecken, verwendet werden.

Die Schaufeln 7 werden hierzu in einer geeigneten Position arretiert. Die Arretierung ist hier nicht dargestellt.

Ist die Rückhaltevorrichtung 9 wie hier dargestellt, als Schild 15 ausgeführt, kann sie auch als Räumeinrichtung zum Räumen des Trocknungsbetts, beispielsweise zu Reinigungszwecken oder auch zum Abtransport des Feuchtgutes 2, dienen.

Figur 3 zeigt eine Detailansicht einer erfindungsgemäßen Wendeeinrichtung 1 mit einer Räumeinrichtung 18 und einer Rückhaltevorrichtung 9. Die Rückhaltevorrichtung 9 ist in diesem Ausführungsbeispiel als gummiartiger Lappen 16 ausgeführt. Der Lappen 16 biegt sich und wird von der Schaufel 7 mitgenommen. Das Ende des Lappens 16 liegt durch den Vorschub der Wendeeinrichtung 1 immer auf der Schicht auf. Der besondere Vorteil dieser Ausführung liegt, neben der kostengünstigen Fertigung und Montage, darin, daß aufwendige Einstellungsarbeiten in Bezug auf die Höhe der Schicht entfallen können. Der Lappen 16 kann hierbei stationär an der Wendeeinrichtung 1 befestigt sein. Der Lappen 16 kann aber auch drehbar mit der Schaufel 7 verbunden sein, was eine besonders einfache Bauweise ermöglicht. Durch die Schwerkraft fällt der Lappen 16 entgegen der Rotation der Schaufeln 7 von selbst in die Rückhalteposition zurück. Die Rückhaltevorrichtung 9 ist in Fahrtrichtung der Wendeeinrichtung 1 vor der Wendeeinrichtung 1 angeordnet. In der dargestellten Ausführung ist der Wendeeinrichtung 1 eine Räumeinrichtung 18 zugeordnet, die sich, bezogen auf die Fahrtrichtung der Wendeeinrichtung 1, hinter der Wendeeinrichtung 1 befindet. Die Räumeinrichtung 18 kann jedoch auch parallel zur Rückhaltevorrichtung 9 vor der Wendeeinrichtung 1 angeordnet werden. Ist die Wendeeinrichtung 1 so ausgeführt, daß ein Wenden bei Vorwärts- und Rückwärtsfahrt möglich ist, wird eine Rückhaltevorrichtung 9 vor und hinter der Wendeeinrichtung 1 angebracht. Ebenso kann eine Räumeinrichtung 18 vor und hinter der Wendeeinrichtung 1 angeordnet werden. Die Räumeinrichtung 18 ist in ihrer Höhe in Bezug auf die Schicht verstellbar, so daß sie sowohl zum Planieren der Schicht, als auch zum Ausschieben des Feuchtgutes 2 aus der Trocknungsanlage verwendet werden kann.

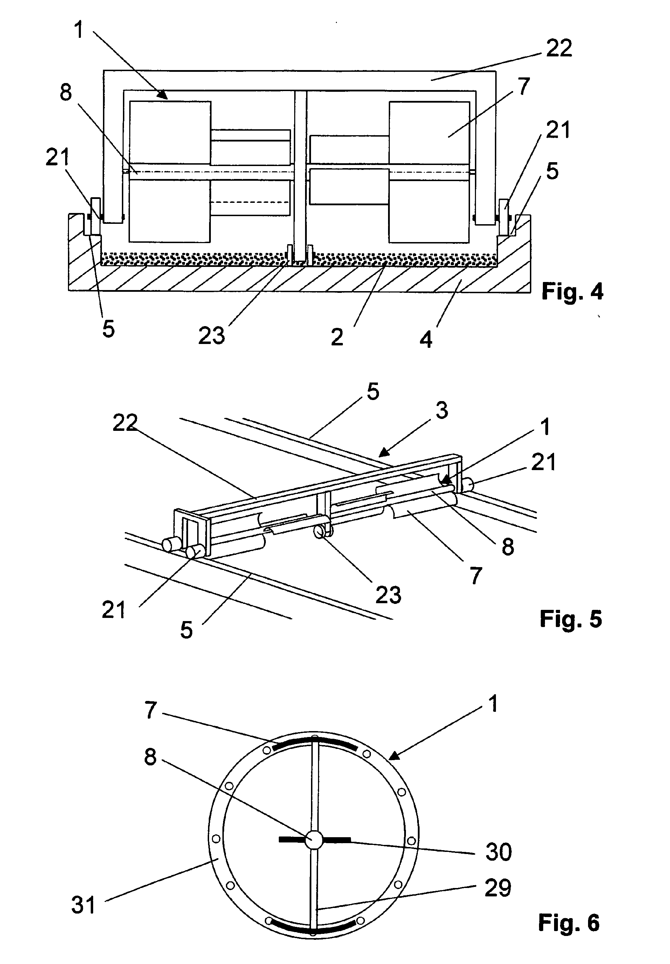

Figur 4 stellt eine erfindungsgemäße Wendeeinrichtung 1 in Portalbauweise mit einem Stützrad 23 dar. Die gesamte Wendeeinrichtung 1 ist an einem Portal 22 befestigt, welches auf Rädern 21 entlang einer Führungsschiene 5 über die gesamte Länge des Trockenbetts verfahrbar ist. Das Portal 22 kann massiv oder auch in Fachwerkbauweise ausgeführt sein und erstreckt sich über die gesamte Breite des Trocknungsbetts. Im gezeigten Beispiel ist die Wendeeinrichtung 1 mittig im Portal 22 gelagert und über ein zusätzliches Stützrad 23 auf dem Boden 4 der Trocknungsanlage 3 abgestützt. Vor dem Stützrad 23 kann ein - hier nicht dargestellter - Pflug angeordnet sein, um den Boden frei zu halten und ein Blockieren des Rades zu verhindern. Wird ein solcher Pflug drehbar oder auch vor und hinter dem Rad 23 angeordnet, kann das Portal 22 mit der Wendeeinrichtung 1 problemlos in beide Richtungen verfahren werden.

Figur 5 zeigt eine perspektivische Darstellung einer Wendeeinrichtung 1 mit mehreren, in Achsrichtung zueinander versetzten Schaufeln 7. Ist die Schaufel 7 einteilig über die gesamte Breite der Wendeeinrichtung 1 ausgeführt, taucht die Schaufel 7 beim Wenden schlagartig in das Feuchtgut 2 ein, was eine stoßartige Belastung der Lager zur Folge hat. Durch die versetzte Anordnung der Schaufeln 7 wird eine verbesserte Krafteinleitung erreicht, was die Belastungen der Lager vermindert und dadurch die Lebensdauer verlängert. Diese Anordnung kann besonders vorteilhaft in Segmentbauweise ausgeführt werden. Hierbei kann nur eine Schaufel 7 oder auch mehrere Schaufeln 7 in einem Segment vorgefertigt werden. Die einzelnen Segmente werden dann beispielsweise durch Schweißen oder Schrauben mit der Welle verbunden. Das einzelne Segment kann sich hierbei über die gesamte Breite der Wendeeinrichtung 1 erstrecken oder auch nur einen Teil ihrer Breite einnehmen. Im dargestellten Beispiel sind mehrere Segmente in axialer Richtung hintereinander, aber radial versetzt zueinander, angeordnet. Die Segmentbauweise erleichtert die Fertigung sowie die bessere Austauschbarkeit einzelner Schaufeln 7. Ebenso ist aber eine direkte Anbindung der Schaufeln 7 an die Welle möglich.

In Figur 6 ist die Anordnung der Schaufel 7 an einer radial zum Umkreis verlaufenden Strebe 29 gezeigt. Die weitgehend symmetrische Anordnung der Schaufel 7 ermöglicht ein Wenden und Durchmischen des Feuchtguts 2 bei Vorwärts- und Rückwärtsfahrt. Ebenso ist jedoch auch eine asymmetrische Anordnung der Schaufel 7 an der Strebe 29 möglich. In Achsnähe angeordnete Rückhaltebleche 30 verhindern bei dieser Ausführungsform, daß das Feuchtgut 2 durch die Schwerkraft über die Achse 8 zurückfällt. Auch bei dieser Ausführungsform können mehrere Schaufeln 7 in Achsrichtung zueinander versetzt angeordnet werden. Die einzelnen Schaufelelemente können beispielsweise durch einen ringförmigen Flansch 31 durch Schrauben miteinander verbunden werden. Es sind jedoch auch andere Verbindungen denkbar. Selbstverständlich kann auch dieser Ausführungsform eine Rückhaltevorrichtung 9 zugeordnet werden. Eine Rückhaltevorrichtung 9 in Form eines Lappens 16 kann hier auf besonders einfache Weise beispielsweise an den Rückhalteblechen 30 befestigt werden. Die Lappen 16 können aber auch an den Schaufeln 7 befestigt werden.

Die vorliegende Erfindung ist nicht auf die beschriebenen Ausführungsbeispiele beschränkt. Abwandlungen im Rahmen der Patentansprüche fallen ebenfalls unter die Erfindung.

## Patentansprüche

1. Wendeeinrichtung (1) zum Wenden und Rückvermischen von Feuchtgut (2), insbesondere Klärschlamm, in feuchtem und getrocknetem Zustand in einer Trocknungsanlage (3), in welcher das Feuchtgut (2) zum Trocknen auf einem Boden (4) in einer Schicht ausgebreitet ist, wobei die Wendeeinrichtung (1) zumindest eine Schaufel (7) aufweist, welche innerhalb eines Umkreises um eine Achse (8) drehbar ist, **dadurch gekennzeichnet, daß** unmittelbar außerhalb des Umkreises und im wesentlichen oberhalb der Schicht eine Rückhaltevorrichtung (9) für das Feuchtgut (2) angeordnet ist und mit der Schaufel (7) zusammenwirkt.

2. Wendeeinrichtung nach dem vorherigen Anspruch, **dadurch gekennzeichnet, daß** der Wendeeinrichtung (1) ein Antrieb zugeordnet ist zum Verfahren der Wendeeinrichtung (1) entlang des Bodens (4) und quer zur Achse (8) der Wendeeinrichtung (1).

3. Wendeeinrichtung nach einem der vorherigen Ansprüche, **dadurch gekennzeichnet, daß** der Wendeeinrichtung (1) ein Antrieb zugeordnet ist zum Verändern des Abstandes des Umkreises vom Boden (4).

4. Wendeeinrichtung nach einem der vorherigen Ansprüche, **dadurch gekennzeichnet, daß** die Rückhaltevorrichtung (9) in ihrer Höhe in Bezug auf den Boden (4) und/oder die Schicht mit einer Stelleinrichtung (12) veränderbar ist.

5. Wendeeinrichtung nach einem der vorherigen Ansprüche, **dadurch gekennzeichnet, daß** die Rückhaltevorrichtung (9) ein Schild (15) ist.

6. Wendeeinrichtung nach einem der vorherigen Ansprüche, **dadurch gekennzeichnet, daß** die Rückhaltevorrichtung (9) ein Lappen (16) ist.

7. Wendeeinrichtung nach einem der vorherigen Ansprüche, **dadurch gekennzeichnet, daß** der Lappen (16) stationär oder mit der Schaufel (7) drehbar angeordnet ist.

8. Wendeeinrichtung nach einem der vorherigen Ansprüche, **dadurch gekennzeichnet, daß** die Rückhaltevorrichtung (9) im wesentlichen entlang des Umkreises verschiebbar ist.

9. Wendeeinrichtung nach einem der vorherigen Ansprüche, **dadurch gekennzeichnet, daß** der Wendeeinrichtung (1) eine Räumeinrichtung (18) zugeordnet ist.

10. Wendeeinrichtung nach einem der vorherigen Ansprüche, **dadurch gekennzeichnet, daß** die Räumeinrichtung (18) und die Rückhaltevorrichtung (9) als eine Baueinheit ausgeführt sind.

11. Wendeeinrichtung nach einem der vorherigen Ansprüche, **dadurch gekennzeichnet, daß** die Räumeinrichtung (18) und/oder die Rückhaltevorrichtung (9) bezogen auf eine Fahrtrichtung der Wendeeinrichtung (1) vor und/oder hinter der Wendeeinrichtung (1) angeordnet sind.

12. Wendeeinrichtung nach einem der vorherigen Ansprüche, **dadurch gekennzeichnet, daß** der Wendeeinrichtung (1) ein Sensor zur Feststellung der Schichthöhe zugeordnet ist.

13. Wendeeinrichtung nach einem der vorherigen Ansprüche, **dadurch gekennzeichnet, daß** der Sensor mit einer Steuerung zur Ermittlung einer durchschnittlichen Schichthöhe verbunden ist.

14. Wendeeinrichtung nach einem der vorherigen Ansprüche, **dadurch gekennzeichnet, daß** die Schaufel (7) an einer Welle angeordnet ist.

15. Wendeeinrichtung nach einem der vorherigen Ansprüche, **dadurch gekennzeichnet, daß** mindestens eine Schaufel (7) in einem Segment angeordnet ist und mehrere Segmente in axialer Richtung auf der Welle angeordnet sind.

16. Wendeeinrichtung nach einem der vorherigen Ansprüche, **dadurch gekennzeichnet, daß** die Schaufel (7) im Querschnitt einem halbkreisähnlichen Polygonzug entspricht.

17. Wendeeinrichtung nach einem der vorherigen Ansprüche, **dadurch gekennzeichnet, daß** die Schaufel (7) an einer radial zum Umkreis verlaufenden Strebe (29) angeordnet ist.

18. Wendeeinrichtung nach einem der vorherigen Ansprüche, **dadurch gekennzeichnet, daß** die Schaufel (7) parallel zur Achse (8) verläuft.

19. Wendeeinrichtung nach einem der vorherigen Ansprüche, **dadurch gekennzeichnet, daß** mehrere Schaufeln (7) in Achsrichtung gesehen versetzt zueinander angeordnet sind.

20. Wendeeinrichtung nach einem der vorherigen Ansprüche, **dadurch gekennzeichnet, daß** die Schaufel (7) in einer vorbestimmten Position arretierbar ist.

21. Wendeeinrichtung nach einem der vorherigen Ansprüche, **dadurch gekennzeichnet, daß** die Wendeeinrichtung (1) ein Stützrad (23) aufweist.

22. Wendeeinrichtung nach einem der vorherigen Ansprüche, **dadurch gekennzeichnet, daß** dem Stützrad (23) ein Pflug zugeordnet ist.

## Claims

1. Turnover device (1) to turn over and mix back moist material (2), in particular sewage sludge in moist and dried state in a drying installation (3) in which the moist material (2) is spread out on a floor (4) in a layer to be dried, whereby the turnover device (1) is equipped with at least one shovel (7) rotatable within a circumference around an axle (8), **characterized in that** a retention device (9) for the moist material (2) is installed directly outside the circumference and essentially above the layer of material and interacts with the shovel (7).

2. Turnover device according to the previous claim, **characterized in that** the turnover device (1) is provided with a drive to move the turnover device (1) along the bottom (4) and at a right angle to the axle (8) of the turnover device (1).

3. Turnover device according to one of the previous claims, **characterized in that** the turnover device (1) is provided with a drive to change the distance between the circumference and the floor (4).

4. Turnover device according to one of the previous claims, **characterized in that** the height of the retention device (9) relative to the floor (4) and/or the layer of material can be changed by means of an adjusting device (12).

5. Turnover device according to one of the previous claims, **characterized in that** the retention device (9) is a screen (15).

6. Turnover device according to one of the previous claims, **characterized in that** the retention device (9) is a tab (16).

7. Turnover device according to one of the previous claims, **characterized in that** the tab (16) is stationary or is rotatable together with the shovel (7).

8. Turnover device according to one of the previous claims, **characterized in that** the retention device (9) is displaceable essentially along the circumference.

9. Turnover device according to one of the previous claims, **characterized in that** a raking device (18) is assigned to the turnover device (1).

10. Turnover device according to one of the previous claims, **characterized in that** the raking device (18) and the retention device (9) are made as one component.

11. Turnover device according to one of the previous claims, **characterized in that** the raking device (18) and/or the retention device (9) is installed in front and/or behind the turnover device (1) considering the direction of travel of the turnover device (1).

12. Turnover device according to one of the previous claims, **characterized in that** a sensor to determine the layer's height is assigned to the turnover device (1).

13. Turnover device according to one of the previous claims, **characterized in that** the sensor is connected to controls for the determination of an average layer height.

14. Turnover device according to one of the previous claims, **characterized in that** the shovel (7) is installed on a shaft.

15. Turnover device according to one of the previous claims, **characterized in that** at least one shovel (7) is installed in a segment and several segments are installed in axial direction on the shaft.

16. Turnover device according to one of the previous claims, **characterized in that** the cross-section of the shovel (7) is a polygonal segment similar to a semicircle.

17. Turnover device according to one of the previous claims, **characterized in that** the shovel (7) is mounted on a stanchion (29) that is radial relative to the circumference.

18. Turnover device according to one of the previous claims, **characterized in that** the shovel (7) extends parallel to the axle (8).

19. Turnover device according to one of the previous claims, **characterized in that** several shovels (7) are offset relative to each other in axial direction.

20. Turnover device according to one of the previous claims, **characterized in that** the shovel (7) can be fixed in a predetermined position.

21. Turnover device according to one of the previous claims, **characterized in that** the turnover device (1) is provided with a support wheel (23).

22. Turnover device according to one of the previous claims, **characterized in that** a plow is assigned to the support wheel (23).

## Revendications

1. Dispositif (1) de tourner pour tourner et remélanger du produit (2) humide, notamment des boues de curage à l'état humide et séché, dans une installation (3) de séchage, dans laquelle le produit (2) humide est, pour le séchage, répandu sur un plateau (4) en une couche, le dispositif (1) de tourner ayant au moins une palette (7) qui peut tourner dans un cercle autour d'un axe (8), **caractérisé en ce que** juste à l'extérieur du cercle et sensiblement au-dessus de la couche est disposé un dispositif (9) de retenue du produit (2) humide qui coopère avec la palette (7).

2. Dispositif de tourner suivant la revendication précédente, **caractérisé en ce qu'**au dispositif (1) de tourner est associé un entraînement pour déplacer le dispositif (1) de tourner de long du plateau (4) et transversalement à l'axe (8) du dispositif (1) de tourner.

3. Dispositif de tourner suivant l'une des revendications précédentes, **caractérisé en ce qu'**il est associé au dispositif (1) de tourner un entraînement pour modifier la distance du cercle au plateau (4).

4. Dispositif de tourner suivant l'une des revendications précédentes, **caractérisé en ce que** le dispositif (9) de retenue peut être modifié en hauteur par rapport au plateau (4) et/ou par rapport à la couche par un dispositif (12) de réglage.

5. Dispositif de tourner suivant l'une des revendications précédentes, **caractérisé en ce que** le dispositif (9) de retenue est un bouclier (15).

6. Dispositif de tourner suivant l'une des revendications précédentes, **caractérisé en ce que** le dispositif (9) de retenue est une languette (16).

7. Dispositif de tourner suivant l'une des revendications précédentes, **caractérisé en ce que** la languette (16) est montée fixe ou tournante avec la palette (7).

8. Dispositif de tourner suivant l'une des revendications précédentes, **caractérisé en ce que** le dispositif (9) de retenue peut se déplacer sensiblement le long du cercle.

9. Dispositif de tourner suivant l'une des revendications précédentes, **caractérisé en ce qu'**il est associé au dispositif (1) de tourner un dispositif (18) de dragage.

10. Dispositif de tourner suivant l'une des revendications précédentes, **caractérisé en ce que** le dispositif (18) de dragage et le dispositif (9) de retenue sont réalisés sous la forme d'une unité de construction.

11. Dispositif de tourner suivant l'une des revendications précédentes, **caractérisé en ce que** le dispositif (18) de dragage et/ou le dispositif (9) de retenue sont disposés, rapporté à un sens de déplacement du dispositif (1) de tourner, en amont et/ou en aval du dispositif (1) de tourner.

12. Dispositif de tourner suivant l'une des revendications précédentes, **caractérisé en ce qu'**il est associé au dispositif (1) de tourner un capteur de détermination de la hauteur de la couche.

13. Dispositif de tourner suivant l'une des revendications précédentes, **caractérisé en ce que** le capteur est relié à une commande de détermination d'une hauteur moyenne de la couche.

14. Dispositif de tourner suivant l'une des revendications précédentes, **caractérisé en ce que** la palette (7) est montée sur un arbre.

15. Dispositif de tourner suivant l'une des revendications précédentes, **caractérisé en ce qu'**au moins une palette (7) est montée dans un segment et plusieurs segments sont montés dans la direction axiale sur l'arbre.

16. Dispositif de tourner suivant l'une des revendications précédentes, **caractérisé en ce que** la palette (7) correspond en section transversale à un tracé polygonal semblable à un demi-cercle.

17. Dispositif de tourner suivant l'une des revendications précédentes, **caractérisé en ce que** la palette (7) est montée sur une entretoise (29) s'étendant radialement par rapport au cercle.

18. Dispositif de tourner suivant l'une des revendications précédentes, **caractérisé en ce que** la palette (7) s'étend parallèlement à l'axe (8).

19. Dispositif de tourner suivant l'une des revendications précédentes, **caractérisé en ce que** plusieurs palettes (7) sont montées de manière décalée les unes par rapport aux autres, telles que vues dans la direction de l'axe.

20. Dispositif de tourner suivant l'une des revendications précédentes, **caractérisé en ce que** la palette (7) peut être bloquée en une position déterminée à l'avance.

21. Dispositif de tourner suivant l'une des revendications précédentes, **caractérisé en ce que** le dispositif (1) de tourner a une roue (23) d'appui.

22. Dispositif de tourner suivant l'une des revendications précédentes, **caractérisé en ce qu'**il est associé une charrue à la roue (23) d'appui.
